# FASCICULE DE BREVET EUROPEEN

(11) **EP 1 293 909 B1**
(45) Date de publication et mention de la délivrance du brevet: **10.11.2010**
(21) Numéro de dépôt: 02078450.0
(22) Date de dépôt: 21.08.2002
(51) Int. Cl.: G06F 13/16, G06F 13/362

(54) **Controle d'accès dynamique d'une fonction à une ressource collective.**
Dynamische Zugriffsteuerung einer Funktion zu einem verteilten Betriebsmittel
Dynamic access control of a function to a shared resource

(30) Priorité: 31.08.2001 FR 0111321
(43) Date de publication de la demande: 19.03.2003
(73) Titulaire: NXP B.V., 5656 AG Eindhoven (NL)
(72) Inventeur: de Perthuis, Hugues, 75008 Paris (FR); Desmicht, Eric, 75008 Paris (FR)
(74) Mandataire: Williamson, Paul Lewis

(56) Documents cités:
- EP-A- 0 267 464
- EP-A- 0 439 987

## Description

L'invention concerne un procédé de contrôle d'accès d'une fonction à une ressource collective. L'invention peut être appliquée, par exemple, dans un dispositif de traitement de données comprenant plusieurs fonctions qui peuvent avoir des besoins d'accès à la mémoire très différents. Un circuit comprenant au moins une fonction de calcul tel un processeur, en liaison avec des blocs de traitement de données qui peuvent être audio, vidéo ou graphiques est un exemple d'un tel dispositif. Certains blocs de traitement de données audio, vidéo ou graphiques requièrent un comportement en temps réel (unités graphiques...) et donc des accès mémoire assez continus. Par contre d'autres blocs de traitement de données peuvent se satisfaire d'accès mémoire moins continus, tant que sur une période donnée une certaine quantité d'accès leur est garantie. Une fonction de calcul accède généralement à la mémoire par rafales (« burst of access », en anglais) pour, par exemple, remplir sa mémoire cache. Si l'accès des fonctions de calcul n'est pas limité, les processus de traitement de données sont bloqués. C'est en particulier un problème pour les processus en temps réel. Il est donc nécessaire de contrôler les accès mémoire de la fonction de calcul.

Il est possible de gérer l'accès à la ressource collective au moyen d'une interface. L'interface met en oeuvre un schéma d'accès sur deux niveaux, celui de l'accès lui-même et celui du cycle. L'invention concerne l'arbitrage au niveau de l'accès.
Un schéma d'accès possible limite les accès d'une fonction à la mémoire en interdisant des accès de la fonction trop rapprochés. Pratiquement un registre est programmé dans l'interface pour imposer un nombre minimum de cycles d'horloge entre deux accès successifs. Si le nombre de cycles entre deux accès est inférieur à la valeur inscrite dans le registre, l'accès sera différé jusqu'à ce que cette valeur soit atteinte. La fonction, par exemple une fonction de calcul, ayant demandé un accès attendra alors plusieurs cycles avant admission. La valeur inscrite dans le registre est fonction des besoins des autres fonctions avec lesquelles la mémoire est partagée.
Ce schéma d'accès est mentionné dans la demande de brevet européen EP0921468. Cette demande de brevet concerne un circuit de contrôle d'accès mémoire dans lequel est notamment mis en oeuvre un registre contenant une grandeur de latence imposant un nombre de cycles fixe entre deux accès successifs à une ressource collective.

Encore un système d'arbitrage est décrit dans le document EP 439 987.

Un but de l'invention est de permettre une exploitation dynamique de la bande passante. L'invention prend les aspects suivants en considération. Les fonctions de calcul ont généralement des besoins d'accès mémoires spécifiques. La plupart du temps, une fonction de calcul n'a pas besoin d'accéder à la mémoire car les données nécessaires sont stockées dans une autre mémoire qui lui est propre telle qu'une mémoire cache par exemple. De temps en temps, elle a besoin d'accéder à des instructions qui ne sont pas dans la mémoire cache. Dans ce cas la fonction de calcul requerra une rafale d'accès vers la mémoire externe pour compléter son cache. Le besoin d'accès d'une fonction donnée peut ainsi varier dans le temps de manière critique. Le schéma d'accès fixe exposé précédemment répartit la capacité d'accès qu'offre la ressource collective parmi les différentes fonctions d'une façon prédéterminée. Cela entraîne une longue attente de la fonction de calcul, dans cet exemple, pour accéder aux données nécessaires. Ainsi, l'invention s'intéresse à l'accès à la ressource collective des fonctions pour lesquelles aucun accès n'est requis pendant un certain temps jusqu'à ce qu'une rafale d'accès soit requise.

En effet, un procédé de contrôle d'accès d'une fonction à une ressource collective conforme au paragraphe introductif est remarquable selon l'invention en ce qu'il inclut les étapes de :
- imposition d'un nombre minimum de cycles d'horloge, dit latence, entre deux accès successifs de la fonction,
- imposition d'un nombre de cycles, dit pénalité, supérieur à la latence entre deux accès successifs lorsqu'un nombre donné d'accès successifs séparés environ et au minimum de la latence, a eu lieu avant.

L'invention permet de prendre en compte les accès précédents de la fonction pour attribuer une autorisation d'accès ou non. En effet, l'invention tient compte du nombre d'accès de la fonction de calcul dans un proche passé en imposant un nombre de cycles entre deux accès successifs supérieur à la latence quand ce nombre d'accès dans un passé proche est supérieur à un nombre donné.
Ainsi, le procédé selon l'invention ajoute à une condition d'accès fixe une condition d'accès à la mémoire permettant d'optimiser les courtes rafales d'accès qui représentent la majorité des accès des fonctions de calcul. Dans un mode de réalisation préféré, la nouvelle condition est calculée de manière à proposer en moyenne autant d'accès à la fonction de calcul que dans le cas d'un schéma d'accès fixe optimisé pour un bon fonctionnement des autres fonctions. En particulier, avec l'invention, la grandeur latence, qui détermine à la manière d'un schéma d'accès fixe, le plus court intervalle entre deux accès successifs, est inférieure à celle du schéma d'accès fixe.
Pratiquement, la présente invention concerne aussi un programme d'ordinateur pour mettre en oeuvre un procédé selon l'invention, un circuit de contrôle d'accès mémoire possédant des registres et des moyens de comparaison pour mettre en oeuvre un procédé selon l'invention et un dispositif de traitement de données dans lequel est avantageusement mis en oeuvre un circuit selon l'invention.

L'invention sera décrite ci-après plus en détail par référence aux figures annexées parmi lesquelles :
la figure 1 est un schéma d'un dispositif de traitement de signaux selon l'invention,
la figure 2 illustre le fonctionnement d'un circuit de contrôle d'accès mémoire selon l'invention,
la figure 3 illustre les accès d'une fonction de calcul à une ressource collective selon l'invention.
Les remarques suivantes concernent les signes de référence. Des entités similaires sont désignées par lettres identiques dans toutes les figures. Plusieurs entités similaires peuvent apparaître dans une seule figure. Dans ce cas, un chiffre ou un suffixe est ajouté à la référence par lettres afin de distinguer des entités similaires. Le chiffre ou le suffixe peut être omis pour des raisons de convenance. Ceci s'applique pour la description ainsi que pour les revendications.

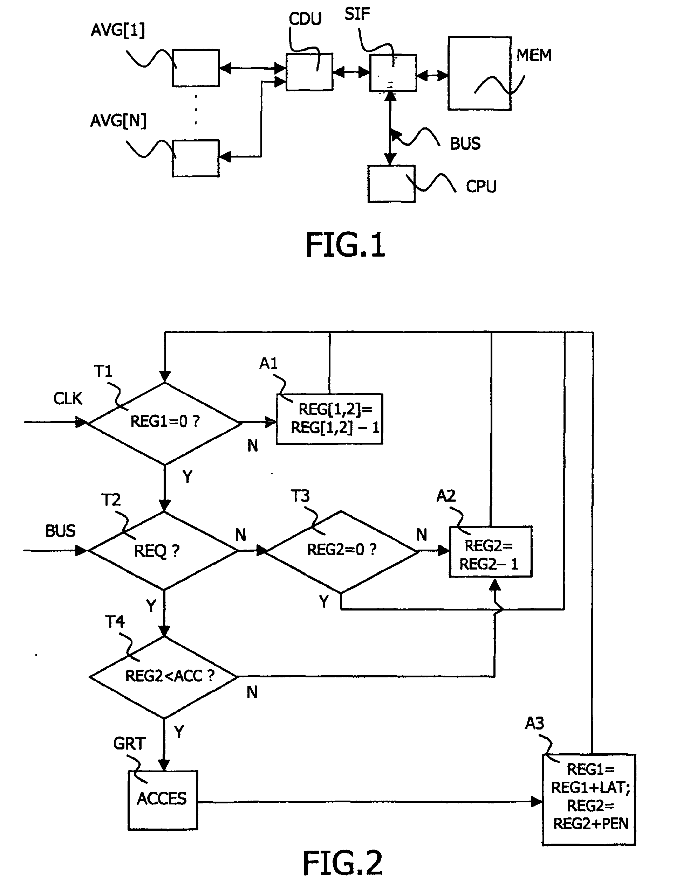

La figure 1 est un schéma d'un dispositif de traitement de signaux selon l'invention. Cette figure concerne un mode de réalisation préféré au sein duquel l'invention peut être avantageusement mise en oeuvre. La fonction dont l'accès est contrôlé selon l'invention est une fonction de calcul tel un processeur CPU. Une ressource collective, ici une mémoire MEM, est partagée par la fonction CPU avec d'autres fonctions dites AVG. Ces autres fonctions sont selon le mode de réalisation préféré décrit sur la figure 1, des fonctions de traitement de données audio, vidéo ou graphiques AVG[1] à AVG[N]. Une unité CDU réalise une première interface entre ces fonctions et une interface de contrôle SIF des accès à la mémoire MEM. Le processeur CPU envoie ses requêtes sur un bus de connexion périphérique BUS vers une interface SIF. Les requêtes d'accès à la ressource collective, qui est une mémoire MEM dans le mode de réalisation préféré, sont reçues par l'interface SIF qui contrôle les accès à la mémoire MEM selon l'invention. La mémoire MEM peut être toutes sortes de mémoire pouvant être partagée entre différentes fonctions, par exemple une mémoire dynamique (SDRAM, DRAM), une mémoire statique (SRAM), une mémoire non-volatile (FLASH, ROM, ...) ou une unité de stockage de masse (HDD, CD, ...)...

La figure 2 illustre le fonctionnement du procédé de contrôle d'accès mémoire selon l'invention. La figure 2 décrit un mode de réalisation préféré avantageusement implémenté dans une interface SIF telle que présentée sur la figure 1.

Dans ce mode de réalisation préféré, l'étape d'imposition de la latence est réalisée par une comparaison à zéro d'une première valeur décrémentée de un à chaque cycle de mémoire où l'élément de calcul n'accède pas à la mémoire et où ladite première valeur est supérieure à zéro, ladite première valeur étant incrémentée d'une grandeur appelée latence à chaque accès de l'élément de calcul. Dans ce mode de réalisation préféré, l'étape d'imposition de la pénalité est réalisée par une comparaison à une grandeur fixée différente de zéro, dite acompte, calculée en fonction du nombre donné d'accès successifs, d'une seconde valeur décrémentée de un à chaque cycle de mémoire où l'élément de calcul n'accède pas à la mémoire et où ladite seconde valeur est supérieure à zéro, ladite seconde valeur étant incrémentée d'une grandeur appelée pénalité à chaque accès de l'élément de calcul. Dans ce mode de réalisation préféré l'autorisation d'accès de l'élément de calcul à la mémoire sous requête de l'élément de calcul est accordée si ladite première valeur est nulle et si ladite seconde valeur est inférieure ou égale à l'acompte.
Dans le mode de réalisation préféré, le principe selon l'invention peut pratiquement être mis en oeuvre dans un circuit de contrôle d'accès d'une fonction à une ressource collective par l'usage de trois registres de configuration contenant chacun une grandeur de configuration : acompte ACC, latence LAT et pénalité PEN. L'invention utilise aussi deux registres provisoires REG1 et REG2 contenant les valeurs décrémentées de 1, quand elles ne sont pas déjà nulles, à chaque cycle où le processeur n'accède pas à la mémoire. Le procédé selon l'invention est régulé par une horloge CLK qui déclenche à chaque cycle une série de tests tels que décrits dans la figure 2. A chaque cycle, un premier test T1 compare la valeur contenue dans le registre REG1 à zéro. Dans le cas où cette valeur REG1 n'est pas nulle, l'accès du processeur CPU à la mémoire MEM ne peut dans tous les cas être autorisé. Il est donc indifférent à ce stade de savoir si une requête a été formulée par le processeur. La requête est alors comme masquée. D'autre part il faut noter que la pénalité PEN étant supérieure à la latence LAT, REG2 ne peut être nul si REG1 ne l'est pas. Ici les deux registres sont alors décrémentés de un dans A1 puis le système attend le cycle suivant.

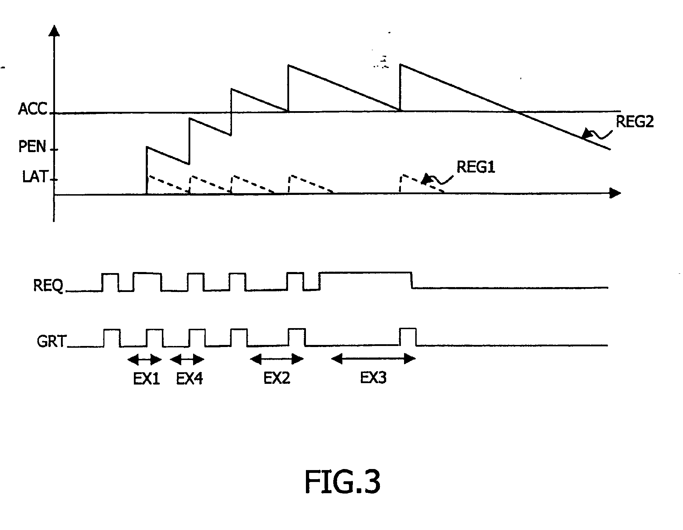

La figure 3 propose une autre illustration de la décrémentation des deux registres REG1 représenté en pointillés et REG2 représenté en trait plein. Lorsque, sur la ligne de requête REQ le processeur fait une requête d'accès tant que REG1 n'est pas nul, cette requête n'est pas satisfaite dans la ligne d'autorisation d'accès GRT avant que REG1 ne soit nul. C'est le cas de la deuxième requête d'accès EX1 sur la figure 3. La latence LAT correspond ainsi à un équivalent d'un schéma d'accès fixe comme exposé dans l'état de la technique. Il apparaît ici la nécessité d'avoir une pénalité PEN supérieure à la latence LAT. Nous allons cependant voir que l'invention permet de diminuer la grandeur de latence fixe de manière conséquente, ce qui présente les avantages exposés auparavant pour l'accès du processeur par courtes rafales. Lorsque REG1 est nul, le mode de réalisation préféré réalise un test T2 sur la présence de requête REQ du processeur. Si, au cycle présent d'horloge CLK, aucune requête REQ n'est présente sur le bus BUS en provenance du processeur CPU, un test T3 de nullité de REG2 est réalisé. Si REG2 est nul, le système attend le cycle suivant pour recommencer le procédé selon l'invention. Si REG2 n'est pas nul, REG2 est décrémenté de un dans A2 puis attend le cycle suivant. C'est le cas EX2 sur la figure 3. En effet, durant EX2, REG1 est nul, REG2 est non nul et décrémenté à chaque cycle d'horloge CLK, cela jusqu'à une nouvelle requête ou jusqu'à annulation de REG2. Si une requête REQ est présentée à l'interface mémoire SIF par l'intermédiaire du bus BUS en provenance du processeur CPU, un test T4 compare REG2 à la grandeur de configuration appelée acompte ACC. Cette grandeur de configuration est avantageusement mémorisée dans un registre de configuration et un simple comparateur compare les deux valeurs présentes chacune dans un registre. Nous verrons dans la suite comment cette grandeur de configuration est déterminée. Lorsque REG2 est supérieure à l'acompte ACC, l'accès n'est pas autorisé selon l'invention et REG2 est alors décrémenté dans A2. Le système attend ensuite le cycle suivant. C'est le cas de EX3 sur la figure 3 : REG2 est supérieur à ACC et l'accès n'est pas autorisé bien que REG1 soit nul. Lorsque REG2 est inférieur ou égal à ACC, l'accès est autorisé dans une étape GRT et les grandeurs REG1 et REG2 sont respectivement incrémentées de la latence LAT et de la pénalité PEN dans A3. Puis le système attend le cycle d'horloge CLK suivant. Sur la figure 3 cela correspond, par exemple, au cas EX4 où un accès est autorisé car REG2 est inférieur à ACC.
La figure 2 proposée n'est qu'indicative d'un mode préféré de réalisation. D'autres modes de réalisation utilisant plus ou moins de registres, testant et comparant les valeurs dans un ordre différent sont envisageables. Ainsi, par exemple, plutôt que de décrémenter des valeurs de registres d'une valeur donnée jusqu'à ce qu'ils atteignent 0, il est possible d'incrémenter ces registres jusqu'à ce qu'ils atteignent la valeur donnée. Dans ce cas l'accès de la fonction à la ressource collective est, par exemple, aussi autorisé par comparaison de valeurs de registres changeants avec des valeurs de registres de configuration. Le principe recherché reste le même, il concerne l'autorisation d'accès selon deux conditions : une condition de latence minimum et une condition sur la présence d'accès dans un passé proche. Les registres utilisés par le procédé selon l'invention sont avantageusement mis en oeuvre à l'intérieur même de l'interface mémoire SIF telle que représentée sur la figure 1. L'interface comprend alors trois registres de configuration destinés à la mise en oeuvre de l'invention et un ou préférentiellement deux registres changeants. Dans le cas où un seul registre est utilisé, la valeur inscrite dans ce registre peut être utilisée dans des tests similaires aux tests T en utilisant des valeurs mémorisées à chaque accès de la fonction et des soustractions entre la valeur courante inscrite et les valeurs mémorisées. En parallèle l'interface inclut donc par exemple, au moins un comparateur pour les tests de grandeurs, un additionneur et un multiplexeur pour, par exemple, choisir selon le résultat des tests, les valeurs (-1, LAT ou PEN) qui doivent être ajoutées à chaque registre REG1 et REG2. Le couple additionneur-multiplexeur peut ainsi permettre de réaliser les étapes A1, A2 et A3.

Plus généralement, un circuit de contrôle pour mettre en oeuvre le procédé selon l'invention comprend des registres, comparateurs, multiplexeurs, additionneurs pour réaliser les opérations sur les grandeurs nécessaires à l'invention telles que décrites dans la figure 2. Ces éléments sont classiquement connus de l'homme du métier qui peut les agencer de multiples manières pour réaliser le procédé selon l'invention. L'homme du métier peut mettre en oeuvre des éléments logiciels ou matériels pour mettre en oeuvre le procédé. Avantageusement les grandeurs de configuration sont définies matériellement au sein de registres matériels. L'utilisation de registres matériels de configuration permet d'être plus rapide qu'avec l'utilisation de moyens logiciels soumis à la vitesse d'horloge. L'invention permet notamment d'accélérer les processus car lorsque le processeur CPU a des accès mémoire plus étendus dans un temps plus court, la rapidité du processus est accrue par rapport à un schéma d'accès fixe.
Ainsi, étant donné que l'invention permet d'éviter un ralentissement du fonctionnement d'une fonction, la rapidité du procédé de contrôle d'accès est une issue importante pour ne pas perdre l'avantage de l'invention.

La présente invention peut en particulier être mise en oeuvre dans les appareils destinés au traitement des données de vidéo numérique avec codage, décodage, compression et réparation du flux de données (DVD, enregistrement, TV numérique avec décryptage de canaux, enregistrement temps réel, interface graphique pour les sous-titrage...). Lesdits appareils possèdent éventuellement des interfaces vers des disques durs pour lire et écrire des données en même temps, vers des éléments d'affichage... Ces interfaces et les fonctions de l'appareil sont avantageusement gérées au sein d'un circuit spécifique qui les regroupent. Ledit circuit est en liaison avec les périphériques de réception et d'exploitation de données et avec une mémoire collective servant pour toutes les fonctions du circuit. Il est alors intéressant qu'une partie du circuit gère l'interface entre au moins un processeur présent dans le circuit de traitement des données et la mémoire collective. Les accès dudit processeur seront avantageusement contrôlés selon l'invention.

Dans la suite nous allons décrire plus précisément l'invention et en particulier un calcul des grandeurs latence, pénalité et acompte dans le cas d'un circuit destiné à réaliser un traitement de données tel que décrit ci dessus.

En se référant à la figure 1, la mémoire MEM est ici une SDRAM, les blocs AVG sont des blocs de traitement de données audio, vidéo et graphiques tels que décrits ci dessus, le CPU est avantageusement un processeur pour données audio, vidéo, graphiques. Un tel CPU envoie des macro commandes suivant une forme prédéfinie comprenant une requête, une adresse et une commande. Le SIF reçoit régulièrement des macro-commandes issues des requêtes générées par les blocs AVG par l'intermédiaire d'une unité CDU. Au sein des blocs AVG, il existe des blocs à temps réel pour lesquels le temps pour recevoir des données est critique pour le fonctionnement de l'appareil. C'est, par exemple, le cas des blocs d'affichage... Il existe d'autres blocs au sein des AVG pour lesquels le temps d'accès aux données n'est pas critique pour le fonctionnement, mais qui sur des périodes assez longues nécessitent néanmoins la réception ou l'envoi d'un certain nombre de données. Le nombre de blocs AVG augmente avec le nombre de fonctions possibles de l'appareil et la complexité des processus mis en jeu. Avec l'évolution des techniques, cela implique et impliquera de plus en plus de donner de plus en plus de bande passante aux blocs AVG. La bande passante disponible pour les processeurs en est réduite d'autant. Si un procédé de contrôle d'accès d'un processeur à la mémoire est configuré de manière fixe tel que proposé dans l'état de la technique, le processeur a une fréquence d'autorisation d'accès de plus en plus réduite. Le flux des requêtes des AVG est, en général, continu et régulier. En effet, les affichages et autres fonctions de traitement de données nécessitent la continuité et la régularité de l'accès à la mémoire. La limitation de capacité de stockage des données AVG en attente de traitement est aussi responsable du fait que la bande passante d'accès à la mémoire pour les AVG doit être augmentée quand le nombre de blocs AVG augmente. Ainsi, dans une configuration simple, en supposant que l'on dispose de 500 Mbytes de bande passante, que les blocs AVG nécessitent pour leur fonctionnement de disposer de 400 Mbytes, il reste 100 Mbytes pour le CPU. Cela porte à 40 le nombre de cycles de latence pour le CPU pour des accès de 8 mots. Le CPU demande généralement à accéder à la mémoire par rafales car le plus souvent il possède déjà beaucoup de données nécessaires dans sa mémoire cache. Lorsqu'il doit compléter cette mémoire cache, il est, en revanche, dommageable que le CPU ne puisse accéder à la mémoire que tous les 40 cycles. La vitesse du CPU peut être diminuée de manière critique dans pareil cas. L'utilisation de l'invention est ici particulièrement avantageuse car, d'une part, le CPU ne requiert des accès que rarement et en rafales généralement relativement courtes et, d'autre part, la partition des blocs AVG entre blocs à temps réels et blocs où le temps est moins critique permet de disposer de bande passante supplémentaire. En effet, dans le cas simple où la moitié des blocs AVG fonctionne en temps réel, seuls 200 Mbytes seront absolument nécessaires pendant une durée raisonnable qui correspondrait à une rafale d'accès. En pic de requêtes d'accès du CPU, c'est-à-dire pendant une courte rafale d'accès, il est donc possible, sans nuire au fonctionnement d'attribuer 300 Mbytes au CPU sur une courte durée. C'est ce que l'invention permet de faire en pratique. En effet pour des accès de 8 mots, il est alors possible en pic d'atteindre un accès tous les 14= (500*8)/300 cycles. Cela est alors une limite minimum pour la valeur de la latence LAT qui définit le nombre de cycles minimum entre deux accès successifs. Cependant cette valeur est constante et fixer la valeur à 14 donne une moyenne d'accès trop importante pour que les blocs AVG fonctionnent correctement sur le long terme. De plus, le fonctionnement du circuit peut entraîner la perte de certains cycles (par exemple 50 cycles sur 500 peuvent ainsi être perdus) provoquant une diminution d'autant de la bande passante. Si le système précédent est appliqué, en prenant une valeur faible de la latence (par exemple 14), le pourcentage d'occupation de la bande passante par le CPU est de 60%. Cela est trop important. Les valeurs choisies en définitive et leurs rapports relatifs doivent en plus permettre de respecter la durée pendant laquelle il est possible de retarder les accès AVG non temps réel. Sur cette durée, la bande passante occupée par le CPU est calculée en multipliant le nombre d'accès par la longueur de l'accès (8, 16, 32 mots...), le nombre d'accès étant pris maximum, c'est-à-dire pour des requêtes en continu de la fonction de calcul durant cette durée. S'il est possible sur une durée égale à environ 90 cycles de retarder une partie des processus AVG, on peut raisonnablement accorder en moyenne 40% de la bande passante au CPU sur cette durée. Ensuite, il faut choisir le nombre d'accès rapides (c'est-à-dire séparés de la latence) que l'on souhaite optimiser. Ici, le nombre d'accès optimisé sera de quatre accès de 8 mots. Cela donne une valeur de la latence de 22 cycles si l'on considère que pendant les 90 cycles, seule la latence a limité les accès à la mémoire. La valeur de la pénalité est alors telle qu'en moyenne sur le long terme, le pourcentage d'occupation par la fonction de calcul (ici le CPU) soit environ à nouveau de 20%, ceci pour un bon fonctionnement des blocs AVG. Cela amène à choisir des valeurs de la pénalité proche de 40, qui est la valeur fixe pour laquelle on obtient un fonctionnement idéal des AVG. L'acompte ACC est déterminé en fonction du nombre d'accès des pics que l'on souhaite optimiser et de la durée durant laquelle il est possible de retarder les accès AVG non temps réel. Si l'on souhaite optimiser des pics de N accès successifs du CPU à la mémoire alors il faut que ACC soit défini par l'équation suivante N*(PEN-LAT) ∼ ACC. Ici, ACC sera donc de 4∗(40-22)= 72. Les valeurs et leurs rapports relatifs dépendront cependant de manière critique des processus de traitement de données du dispositif selon l'invention tel qu'exposé, par exemple, sur la figure 1. En fonction des exigences des blocs AVG, ces valeurs pourront être largement différentes de celles exposées ici sans pour autant s'exclure du principe de l'invention.
Il existe de nombreuses façons de mettre en oeuvre les entités fonctionnelles présentées dans les étapes des procédés selon l'invention par des moyens logiciels et/ou matériels accessibles à l'homme du métier. C'est pourquoi les figures sont schématiques. Ainsi, bien que les figures montrent différentes entités fonctionnelles réalisées par différents blocs, cela n'exclut pas que plusieurs entités fonctionnelles soient présentes dans un seul moyen logiciel et/ou matériel. Cela n'exclut pas non plus qu'une combinaison de moyens logiciels et/ou matériels permette de réaliser une entité fonctionnelle.

## Revendications

1. Procédé de contrôlé d'accès d'une fonction à une ressource collective incluant les étapes de :
- imposition d'un nombre minimum de cycles d'horloge, dit latence, entre deux accès successifs de la fonction,
- imposition d'un nombre de cycles, dit pénalité, supérieur à la latence entre deux accès successifs lorsqu'un nombre donné d'accès successifs séparés environ et au minimum de la latence, a eu lieu avant

2. Procédé de contrôle d'accès selon la revendication 1, **caractérisé en ce que** la fonction est une fonction de calcul.

3. Procédé de contrôle d'accès selon la revendication 1, **caractérisé en ce que** la ressource collective est une mémoire.

4. Procédé de contrôle d'accès selon l'une des revendications 1 à 3, **caractérisé en ce que** l'étape d'imposition de la latence est réalisée par une comparaison à zéro d'une première valeur décrémentée de un à chaque cycle de mémoire où la fonction n'accède pas à la ressource collective et où ladite première valeur est supérieure à zéro, ladite première valeur étant incrémentée d'une grandeur appelée latence à chaque accès de la fonction,
**en ce que** l'étape d'imposition de la pénalité est réalisée par une comparaison à une grandeur fixée différente de zéro dite acompte calculée en fonction du nombre donné d'accès successifs, d'une seconde valeur décrémentée de un à chaque cycle de mémoire où la fonction n'accède pas à la ressource collective et où ladite seconde valeur est supérieure à zéro, ladite seconde valeur étant incrémentée d'une grandeur appelée pénalité à chaque accès de la fonction,
et **en ce que** l'autorisation d'accès de la fonction à la ressource collective sous requête de la fonction est accordée si ladite première valeur est nulle et si ladite seconde valeur est Inférieure ou égale à l'acompte.

5. Procédé de contrôle d'accès selon l'une des revendications 1 à 4, **caractérisé en ce que** les nombres dits latence et pénalité sont calculés en fonction d'une moyenne d'accès de la fonction à la ressource collective, ladite moyenne d'accès prenant en compte des accès d'autres fonctions à la ressource collective.

6. Produit programme d'ordinateur comprenant des instructions pour mettre en oeuvre un procédé de contrôle d'accès selon l'une des revendications 1 à 5.

7. Circuit de contrôle d'accès d'une fonction à une ressource collective couplée au circuit, comprenant :
- des moyens dits de latence pour imposer un nombre minimum de cycles dit latence entre deux accès successifs de la fonction,
- des moyens dits de pénalité pour imposer un nombre de cycles dit pénalité, supérieur à la latence, entre deux accès successifs lorsqu'un nombre donné d'accès successifs séparés environ et au minimum de la latence, a eu lieu.

8. Circuit de contrôle d'accès selon la revendication 7, **caractérisé en ce que** les moyens de latence incluent un premier registre programmé pour contenir une première valeur décrémentée de un à chaque cycle de mémoire où la fonction n'accède pas à la ressource collective et où ladite première valeur est supérieure à zéro, ladite première valeur étant incrémentée d'une grandeur appelée latence à chaque accès de la fonction, les moyens de latence incluant en outre des moyens de comparaison de la première valeur à zéro, **en ce que** les moyens de pénalité incluent un second registre programmé pour contenir une seconde valeur décrémentée de un à chaque cycle de mémoire où la fonction n'accède pas à la ressource collective et où ladite seconde valeur est supérieure à zéro, ladite seconde valeur étant incrémentée d'une grandeur appelée pénalité à chaque accès de la fonction, les moyens de pénalité incluant en outre des moyens de comparaison de la seconde valeur à une grandeur fixée différente de zéro dite acompte calculée en fonction du nombre donné d'accès successifs, et **en ce que** l'accès de la fonction à la ressource collective est autorisé sous requête de la fonction si ladite première valeur est nulle et si ladite seconde valeur est inférieure ou égale à l'acompte.

9. Circuit de contrôle d'accès selon l'une des revendications 7 et 8, **caractérisé en ce que** les grandeurs dites pénalité sont calculées en fonction d'une moyenne d'accès de la fonction à la ressource collective, ladite moyenne d'accès prenant en compte des accès d'autres fonctions à la ressource collective.

10. Dispositif de traitement de données incluant une ressource collective partagée entre différentes fonctions, l'accès d'au moins une desdites fonctions à la ressource collective étant contrôle à l'aide d'un circuit de contrôle d'accès tel que revendiqué dans une des revendications 7 à 9.

## Claims

1. A method of controlling access by a function to a collective resource, the method including the steps of:
- imposing a minimum number of clock cycles, called latency, between two successive accesses by the function,
- imposing a number of cycles called penalty, greater than the latency between two successive accesses when a given number of successive accesses, separated by approximately the latency and by at least the same value as the latency, has previously occurred.

2. An access control method as claimed in claim 1, **characterized in that** the function is a calculation function.

3. An access control method as claimed in claim 1, **characterized in that** the collective resource is a memory.

4. An access control method as claimed in any one of the claims 1 to 3, **characterized in that** the step of imposing latency is carried out via a comparison to zero of a first value decremented by unity with each memory cycle where the function does not access the collective resource and where said first value is greater than zero, said first value being incremented by a magnitude called latency with each access of the function, **in that** the step of imposing penalty is realized via a comparison to a fixed magnitude different from zero called account calculated as a function of the given number of successive accesses, of a second value decremented by unity with each memory cycle where the function does not access the collective resource and where said second value is greater than zero, said second value being incremented by a magnitude called penalty with each access of the function, and **in that** the authorization of access of the function to the collective resource upon request of the function is granted if said first value is zero and if said second value is lower than or equal to the account.

5. An access control method as claimed in any one of the claims 1 to 4, **characterized in that** the numbers called latency and penalty are calculated as a function of an average access of the function to the collective resource, said average access taking account of accesses to the collective resource by other functions.

6. A computer program product comprising instructions for implementing an access control method as claimed in any one of the claims 1 to 5.

7. An access control circuit of a function to a collective resource coupled to the circuit, comprising:
- means called latency means for imposing a minimum number of cycles called latency between two successive accesses of the function,
- means called penalty means for imposing a number of cycles called penalty which is greater than the latency, between two successive accesses when a given number of successive accesses, separated by approximately the latency, has previously occurred.

8. An access control circuit as claimed in claim 7, **characterized in that** the latency means include a first register programmed for containing a first value decremented by unity with each memory cycle where the function does not access the collective resource and where said first value is greater than zero, said first value being incremented by a magnitude called latency with each access of the function, the latency means further including comparing means for comparing the first value to zero, **in that** the penalty means include a second register programmed for containing a second value decremented by unity with each memory cycle where the function does not access the collective resource and where said second value is greater than zero, said second value being incremented by a magnitude called penalty with each access of the function, the penalty means further including means for comparing the second value to a fixed magnitude different from zero called account calculated as a function of the given number of successive accesses, and **in that** the access of the function to the collective resource is granted upon request of the function if said first value is zero and if said second value is lower than or equal to the account.

9. An access control circuit as claimed in any one of the claims 7 and 8, **characterized in that** the magnitudes called penalty are calculated as a function of an average access of the function to the collective resource, said average access taking account of the accesses to the collective resource by other functions.

10. A data processing device including a collective resource divided over various functions, the access of at least one of said functions to the collective resource being controlled with the aid of an access control circuit as claimed in any one of the claims 7 to 9.

## Patentansprüche

1. Verfahren zur Steuerung des Zugriffs einer Funktion auf eine gemeinsame Ressource, aufweisend die Schritte:
- Festsetzung einer Minimalanzahl von Zeitzyklen, sogenannter Latenz, zwischen zwei aufeinanderfolgenden Zugriffen der Funktion,
- Festsetzung einer Anzahl von Zyklen, sogenannter Strafe, größer als die Latenz zwischen zwei aufeinanderfolgenden Zugriffen, wenn eine gegebene Anzahl von aufeinanderfolgenden getrennten Zugriffen um das Minimum der Latenz herum und am Minimum der Latenz vorher stattgefunden hat.

2. Verfahren zur Zugriffssteuerung gemäß Anspruch 1, **dadurch gekennzeichnet, dass** die Funktion eine Rechenfunktion ist.

3. Verfahren zur Zugriffssteuerung gemäß Anspruch 1, **dadurch gekennzeichnet, dass** die gemeinsame Ressource ein Speicher ist.

4. Verfahren zur Zugriffssteuerung gemäß einem der Ansprüche 1 bis 3, **dadurch gekennzeichnet, dass** der Schritt der Festsetzung der Latenz durch einen Vergleich mit null eines ersten Wertes realisiert ist, der in jedem Zyklus des Speichers um eins dekrementiert wird, in dem die Funktion nicht auf die gemeinsame Ressource zugreift und in dem der erste Wert größer als null ist, wobei der erste Wert um eine Größe, Latenz genannt, bei jedem Zugriff der Funktion inkrementiert wird,
dass der Schritt der Festsetzung der Strafe durch einen Vergleich mit einer festen Größe unterschiedlich zu null einer sogenannten Rate berechnet g der gemäß der gegebenen Anzahl aufeinanderfolgender Zugriffe, eines zweiten Wertes realisiert ist, der in jedem Zyklus des Speichers um eins dekrementiert wird, in dem die Funktion nicht auf die gemeinsame Ressource zugreift und in dem der zweite Wert größer als null ist, wobei der zweite Wert um eine Größe, Strafe genannt, bei jedem Zugriff der Funktion inkrementiert wird,
und dass die Genehmigung des Zugriffs der Funktion auf die gemeinsame Ressource auf Anfrage der Funktion erteilt wird, wenn der erste Wert null ist und wenn der zweite Wert niedriger oder gleich der Rate ist.

5. Verfahren zur Zugriffssteuerung gemäß einem der Ansprüche 1 bis 4, **dadurch gekennzeichnet, dass** die sogenannten Zahlen Latenz und Strafe gemäß einem Durchschnitt des Zugriffs der Funktion auf die gemeinsame Ressource berechnet sind, wobei der Durchschnitt des Zugriffs aus der Berechnung der Zugriffe anderer Funktionen auf die gemeinsame Ressource genommen wird.

6. Computerprogrammprodukt aufweisend Anweisungen um ein Verfahren zur Zugriffssteuerung gemäß einem der Ansprüche 1 bis 5 auszuführen.

7. Schaltung zur Steuerung des Zugriffs einer Funktion auf eine gemeinsame Ressource, die mit der Schaltung gekoppelt ist, aufweisend:
- sogenannte Latenzmittel zum Festsetzen einer Minimalanzahl von Zyklen sogenannter Latenz zwischen zwei aufeinanderfolgenden Zugriffen der Funktion,
- sogenannte Strafmittel zum Festsetzen einer Anzahl von Zyklen sogenannter Strafe, größer als die Latenz, zwischen zwei aufeinanderfolgenden Zugriffen, wenn eine gegebene Anzahl von aufeinanderfolgenden getrennten Zugriffen um das Minimum der Latenz herum und am Minimum der Latenz vorher stattgefunden hat.

8. Schaltung zur Zugriffssteuerung gemäß Anspruch 7, **dadurch gekennzeichnet, dass** die Latenzmittel ein erstes programmiertes Register aufweisen, um einen ersten Wert aufzuweisen, der in jedem Zyklus des Speichers um eins dekrementiert wird, in dem die Funktion nicht auf die gemeinsame Ressource zugreift und in dem der erste Wert größer als null ist, wobei der erste Wert um eine genannte Größe Latenz bei jedem Zugriff der Funktion inkrementiert wird, wobei die Latenzmittel des Weiteren Mittel zum Vergleich der ersten Wertes mit Null aufweisen, dass die Strafmittel ein zweites programmiertes Register aufweisen, um einen zweiten Wert aufzuweisen, der in jedem Zyklus des Speichers um eins dekrementiert wird, in dem die Funktion nicht auf die gemeinsame Ressource zugreift und in dem der zweite Wert größer als null ist, wobei der zweite Wert um eine genannte Größe Strafe bei jedem Zugriff der Funktion inkrementiert wird, wobei die Strafmittel des Weiteren Mittel zum Vergleich des zweiten Wertes mit einer festen Größe unterschiedlich zu null einer sogenannten Rate berechnet gemäß der gegebenen Anzahl aufeinanderfolgender Zugriffe, und dass der Zugriff der Funktion auf die gemeinsame Ressource auf Anfrage der Funktion genehmigt wird, wenn der erste Wert null ist und wenn der zweite Wert niedriger oder gleich der Rate ist.

9. Schaltung zur Zugriffssteuerung gemäß einem der Ansprüche 7 und 8, **dadurch gekennzeichnet, dass** die sogenannten Größen Latenz und Strafe gemäß einem Durchschnitt des Zugriffs der Funktion auf die gemeinsame Ressource berechnet sind, wobei der Durchschnitt des Zugriffs aus der Berechnung der Zugriffe anderer Funktionen auf die gemeinsame Ressource genommen wird.

10. Datenverarbeitungseinrichtung aufweisend eine gemeinsame Ressource, die zwischen unterschiedlichen Funktionen geteilt ist, wobei der Zugriff von mindestens einer der Funktionen auf die gemeinsame Ressource mit Hilfe einer Schaltung zur Steuerung des Zugriffs gesteuert wird, wie sie in einem der Ansprüche 7 bis 9 beansprucht ist.
